# EUROPEAN PATENT APPLICATION

(11) **EP 1 531 510 A1**
(43) Date of publication of application: **18.05.2005**
(21) Application number: 03025494.0
(22) Date of filing: 06.11.2003
(51) Int. Cl.: H01M 8/10, H01M 4/88, C25B 9/10

(54) **Method and apparatus for coating an ion-exchange membrane with a catalyst layer**

(71) Applicant: BALLARD POWER SYSTEMS INC., Burnaby, B.C. V5J 5J9 (CA)
(72) Inventor: Vlajnic, Goran, Burnaby British Columbia V5H 2S7 (CA); Beattie, Paul D., Port Moody British Columbia V3H 3Y6 (CA); Wilke, Todd E., West Vancouver British Columbia V7W 2H9 (CA)
(74) Representative: Beyer, Andreas, Dr.

(57) **Abstract**

A method for coating an ion-exchange membrane with a catalyst layer by first heating a surface of the membrane to thereby soften the surface, followed by deposition of a catalyst composition and compaction into the ion-exchange membrane to produce a catalyst-coated membrane. Heating of the ion-exchange membrane may be at a temperature between 20°C and 50°C, typically between 30°C and 40°C, above the glass transition temperature of the dry ion-exchange membrane. In one embodiment, the catalyst composition is fluidized in a fluidized bed reactor prior to being deposited on the membrane surface. A system for coating the ion-exchange membrane is also provided. The catalyst-coated membrane is particularly useful in electrochemical fuel cells.

## Description

### BACKGROUND OF THE INVENTION

### Field Of The Invention

The present invention relates to a method and apparatus for coating an ion-exchange membrane with a catalyst layer and in particular an ion-exchange membrane for use in an electrochemical fuel cell.

### Description of the Related Art

Electrochemical fuel cells convert fuel and oxidant to electricity and reaction product. Solid polymer electrochemical fuel cells generally employ a membrane electrode assembly ("MEA") in which an electrolyte in the form of an ion-exchange membrane is disposed between two electrode layers. The electrode layers are made from porous, electrically conductive sheet material, such as carbon fiber paper or carbon cloth. In a typical MEA, the electrode layers provide structural support to the membrane, which is typically thin and flexible.

The MEA contains an electrocatalyst, typically comprising finely comminuted platinum particles disposed in a layer at each membrane/electrode layer interface, to induce the desired electrochemical reaction. The electrodes are electrically coupled to provide a path for conducting electrons between the electrodes through an external load.

During operation of the fuel cell, at the anode, the fuel permeates the porous electrode layer and reacts at the electrocatically active site in the electrocatalyst layer to form protons and electrons. The protons migrate through the ion-exchange membrane to the cathode. At the cathode, the oxygen-containing gas supply permeates the porous electrode material and reacts at the cathode electrocatalyst layer with the protons to form water as a reaction product.

Electrocatalyst can be incorporated at the electrode/membrane interface in polymer electrolyte fuel cells by applying it as a layer on either an electrode substrate or on the membrane itself. In the former case, electrocatalyst particles are typically mixed with a liquid to form a slurry or ink, which is then applied to the electrode substrate. While the slurry preferably wets the substrate surface to an extent, the slurry may penetrate into the substrate such that it is no longer catalytically useful. The reaction zone is generally only close to the ion-exchange membrane. Comparatively lower catalyst loadings can typically be achieved if the ion-exchange membrane is coated while still maintaining performance. In addition to waste of catalyst material, a thicker electrocatalyst layer may also lead to increased mass transport losses.

Typical methods of preparing a catalyst-coated membrane (CCM) also start with the preparation of a slurry. A slurry typically comprises a carbon-supported catalyst, the polymer matrix/binder and a suitable liquid vehicle such as, for example water, methanol or isopropanol. The slurry is then either directly applied onto the membrane by, for example screen printing, or applied onto a separate carrier or release film from which, after drying, it is subsequently transferred onto the membrane using heat and pressure in a decal process. However, there are problems with both of these general techniques. For example, if a slurry is directly applied to the membrane, the liquid vehicle may cause swelling of the membrane by as much as 25% in any direction. While swelling is not typically seen with the decal process, it is comparatively slow and not easily amenable to mass production.

Once the catalyst layer has been applied to the membrane, a further problem is delamination or peeling. In United States Patent No. 4,272,353, the surface of the membrane was abraded prior to deposition of the catalyst to provide a support for locking, uniting or fixing the finely-divided catalyst particles to the surface of the membrane. However, the abrasion step may result in deleterious effects to the strength, dimensional stability and electrical properties of the membrane. An alternative method is disclosed in United States Patent No. 5,547,911 wherein the surface of the membrane is hydrolyzed to improve adhesion once a catalyst ink is applied thereto. However, both the hydrolysis and the catalyst application involve the applications of solutions to the membrane.

Accordingly, there continues to be a need for systems and methods that efficiently coat an ion-exchange membrane with a catalyst composition. The present invention fulfills these needs and provides further related advantages.

### BRIEF SUMMARY OF THE INVENTION

In one embodiment, a method is provided for coating a catalyst layer on an ion-exchange membrane by heating a surface of the ion-exchange membrane and thereby softening the surface; depositing a catalyst composition onto the heated surface of the ion-exchange membrane; and then compacting the catalyst composition into the ion-exchange membrane.

In a more specific embodiment, the surface of the ion-exchange membrane is heated to a temperature between 20°C and 50°C above the glass transition temperature of the membrane. In another more specific embodiment, the surface is heated to a temperature between 30°C and 40°C above the glass transition temperature. For example, if a dry NAFION® membrane is used, a suitable temperature may be between 130°C and 150°C.

In another embodiment, the catalyst composition is a dry catalyst nanopowder. Deposition of the catalyst powder may be performed, for example, with a fluidized bed reactor in which the catalyst powder is fluidized. A gas stream is then directed through the fluidized powder to blow the catalyst powder onto the heated surface of the ion-exchange membrane. The gas stream may be for example, compressed air or an inert gas such as nitrogen or argon. It is understood that other conventional techniques may alternatively be employed in depositing the catalyst layer onto the heated surface of the ion-exchange membrane. Furthermore, it is understood that the scope of the invention is not limited to the dry deposition of a catalyst powder onto an ion-exchange membrane and that the catalyst composition may be an aqueous or solvent-based catalyst ink. Such a catalyst ink may be deposited on the ion-exchange membrane by, for example, screen printing or other conventional wet-based techniques. If an ink is used, then the coated membrane is typically dried prior to compaction of the catalyst layer into the ion-exchange membrane.

In depositing the catalyst composition onto the heated surface of the ion-exchange membrane, improved adhesion may be observed by applying a slight vacuum to the ion-exchange membrane. Atomized ionomer droplets may also be sprayed onto the catalyst composition prior to compaction. The droplets may then be dried by, for example, heating prior to compaction. A similar heating step may be employed even if drying is not necessary to further soften the catalyst/membrane system prior to compaction. As used herein, the term "compaction" encompasses both the application of pressure and temperature, for example through heat calendering, as well as through the application of only pressure.

In large-scale manufacture, it is advantageous to have methodologies that are amenable to continuous processing. Thus, in a further embodiment, the catalyst composition is continuously coated on the ion-exchange membrane.

These and other aspects of this invention will be evident upon review of the attached figures and following detailed description.

### BRIEF DESCRIPTION OF THE DRAWINGS

Figure 1 is a cross-sectional view of an ion-exchange membrane illustrated at various stages of being coated with a catalyst layer.
Figure 2 schematically illustrates the continuous coating of an ion-exchange membrane with a catalyst composition.

### DETAILED DESCRIPTION OF THE INVENTION

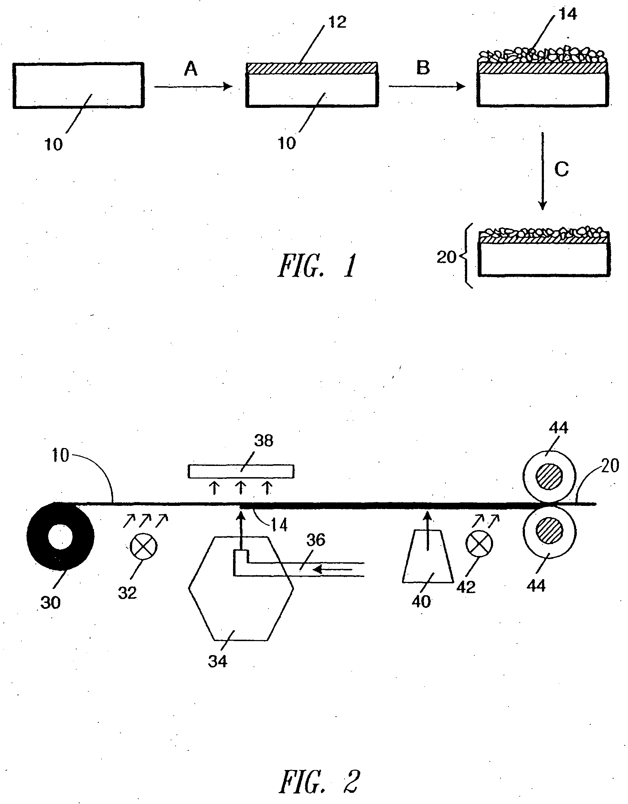

Figure 1 illustrates a cross-sectional view of an ion-exchange membrane 10 at various stages of being coated with a catalyst composition. The thickness of membrane 10 is commonly 25 to 175 microns, and typically 25 to 125 microns. A representative commercial sulfonated perfluorocarbon membrane is sold by E.I. Du Pont de Nemours and Company under the trade designation NAFION®.

In a first step A, a surface 12 of membrane 10 is softened by heating. For example, softening of surface 12 may be achieved by heating to a temperature between 20°C and 50°C above the glass transition temperature (Tg) of the ion-exchange membrane. In one embodiment, surface 12 is heated to a temperature between 30°C and 40°C above Tg. For example, if a NAFION® membrane is used, surface 12 may be heated to a temperature between 130°C and 150°C (Tg for NAFION® is around 100°C). By softening surface 12, better contact and improved adhesion is observed when membrane 10 is subsequently coated with catalyst layer 14 as in step B.

The electrocatalyst of catalyst layer 14 may be a metal black, an alloy or a supported metal-based catalyst, for example, platinum supported on carbon particles may be used. Other catalysts include other noble or transition metal catalysts. The catalyst layer may also include organic binder such as PTFE, polymer electrolyte powder and fillers. Ionically conductive ionomer particles, if present, improve fuel cell performance by providing ion-conducting paths between the electrocatalyst surface and the ion-exchange membrane.

Once catalyst layer 14 is deposited onto heated surface 12 of membrane 10 in step B, the final step C may be performed by compacting catalyst layer 14 into membrane 10 to yield catalyst-coated membrane (CCM) 20. As shown in Figure 2, the method as described above in reference to Figure 1 may readily be adapted to the continuous production of CCM 20.

Membrane 10 starts in roll 30 and is then fed past infrared lamps 32 which are used to soften membrane by heating as in step A of Figure 1. Infrared lamps 32 are particularly well suited for continuous processing though other methods of heating may be used.

A fluidized bed reactor 34 is used in the embodiment illustrated in Figure 2 for the deposition of catalyst layer 14 on membrane 10 as in step B of Figure 1. In general, a fluidized bed is produced by passing a stream of gas upward through a bed of particles at sufficient velocity to suspend the particles. In this state, the mixture of particles behaves like a liquid having density equal to the bulk density of the particles. In this manner, the particles are "fluidized".

A polymer electrolyte, if desired, may be added to fluidized bed reactor 34 as a powder or, after the dry components have been fluidized, as a fine aerosol of ionomer droplets. Once the system is homogeneous, a second stream of gas 36 directs the catalyst composition to the heated surface 12 (not shown in Figure 2) of membrane 10. Gas 36 may be, for example, compressed air or an inert gas such as nitrogen.

Compaction rolls 44 compact the catalyst/membrane system to provide the CCM 20 as in step C in Figure 1. Compaction rolls 44 are particularly well suited for continuous processing, although other methods of compaction may also be used. For example, pressure may be carried out by manual presses, flat plate presses, a roller or rollers pressing against a flat plate backup member or a roller or any other suitable means of applying pressure, manually or automatically. Compaction rollers 44, or any other suitable compaction device, would typically have a release surface, such as a coating of PTFE, fluorocarbon or other suitable release material thereon.

Adhesion of the catalyst layer to membrane 10 may be further improved by, for example, applying a slight vacuum 38 opposite fluidized bed reactor 34. A "slight" vacuum may be between 10 and 50 mbar and may result from, for example, a draft fan effect or by charging fluidized bed reactor 34 and ion exchange membrane 10 with opposite charge. Also, an aerosol coater 40 may be used to coat the catalyst layer with an aerosol spray comprising ionomer droplets. Such an aerosol spray may be beneficial regardless of whether polymer electrolyte has been added to fluidized bed reactor 34. Further improvement in catalyst adhesion may be observed by placing additional infrared lamps 42 to soften the catalyst/membrane system immediately prior to compaction. If necessary, infrared lamps 42 may also be used to dry the catalyst layer. For example, in one embodiment, infrared lamps 42 heat the membrane/catalyst system to a temperature between 60°C and 80°C.

The catalyst loading on CCM 20 will vary depending on several factors, including concentration of catalyst in fluidized bed reactor 34, the linear speed of membrane 10, and/or the pressure of gases that deposit catalyst particles onto membrane 10. In addition to catalyst loading, different catalyst layer structures can be designed by varying the particle size of the catalyst components, the type and amount of any binder used and/or the temperature of surface 12.

The catalyst loading can be monitored in a number of ways. For example, X-ray fluorescence (XRF) offers elemental analysis of a wide variety of materials in a highly precise and generally non-destructive way. XRF spectrometers operate by irradiating a sample with a beam of high energy X-rays and exciting characteristic X-rays from those elements present in the sample. The individual X-ray wavelengths are sorted via a system of crystals and detectors, and specific intensities are accumulated for each element. Chemical concentrations of individual elements can then be established by reference to stored calibration data. Alternatively, catalyst loadings can be determined from the concentration of catalyst in the fluidized bed and by measuring the thickness of the deposited catalyst layer.

After the first side of membrane 10 has been coated with a catalyst layer, the same process can be repeated for the other side. Alternatively, both sides of membrane 10 may be coated simultaneously or steps A and B may be performed on one side, then the other prior to compaction of both sides of membrane 10 simultaneously or any other combination or permutation. Electrodes may then be hot-bonded or laminated on the coated membrane to produce a continuous MEA that can be cut to the desired shape and size for use in electrochemical cells. Alternatively, the electrodes may be bonded simultaneous with step C.

While particular steps, elements, embodiments and applications of the present invention have been shown and described, it will be understood, of course, that the invention is not limited thereto since modifications may be made by persons skilled in the art, particularly in light of the foregoing teachings. It is therefore contemplated by the appended claims to cover such modifications as incorporate those steps or elements that come within the spirit and scope of the invention. Lastly, all of the above U.S. patents, U.S. patent application publications, U.S. patent applications, foreign patents, foreign patent applications and non-patent publications referred to in this specification and/or listed in the Application Data Sheet, are incorporated herein by reference, in their entirety.

## Claims

1. A method for coating a ion-exchange membrane with a catalyst layer for use in an electrochemical fuel cell, the method comprising:
heating a surface of the ion-exchange membrane;
depositing a catalyst composition onto the heated surface of the ion-exchange membrane; and
compacting the catalyst composition into the ion-exchange membrane.

2. The method of claim 1 wherein the heating step heats the membrane surface to a temperature between 20°C and 50°C above of the glass transition temperature of the ion-exchange membrane.

3. The method of claim 1 wherein the heating step heats the membrane surface to a temperature between 30°C and 40°C above of the glass transition temperature of the ion-exchange membrane.

4. The method of claim 1 wherein the heating step heats the membrane surface to a temperature between 130°C and 150°C.

5. The method of claim 1 wherein the heating step is performed with infrared lamps directed to the surface of the ion-exchange membrane.

6. The method of claim 1 wherein the catalyst composition is a dry catalyst powder.

7. The method of claim 1 wherein the depositing step comprises fluidizing the catalyst composition in a fluidized bed reactor and blowing the catalyst composition onto the heated surface of the ion-exchange membrane.

8. The method of claim 7 wherein the catalyst composition comprises catalyst powder and atomized ionomer droplets.

9. The method of claim 7 wherein the blowing step comprises directing a gas stream through the fluidized catalyst composition to the heated surface of the ion-exchange membrane.

10. The method of claim 9 wherein the gas stream is air.

11. The method of claim 9 wherein the gas stream is an inert gas.

12. The method of claim 11 wherein the inert gas is nitrogen.

13. The method of claim 1 further comprising applying a slight vacuum to the membrane.

14. The method of claim 13 wherein the slight vacuum is between 10 and 50 mbar.

15. The method of claim 1 further comprising spraying the catalyst composition deposited onto the ion-exchange membrane with atomized ionomer droplets prior to the compacting step.

16. The method of claim 15 further comprising drying the ion-exchange membrane between the spraying and the compacting steps.

17. The method of claim 16 wherein the drying step comprises heating the ion-exchange membrane.

18. The method of claim 17 wherein the heating step is to a temperature between 60°C and 80°C.

19. The method of claim 1 further comprising heating the catalyst composition deposited onto the ion-exchange membrane before the compacting step.

20. The method of claim 1 wherein the catalyst composition is continuously coated on the ion-exchange membrane.

21. The method of claim 1 further comprising bonding an electrode to the catalyst coated membrane.

22. The method of claim 21 wherein the bonding step and the compacting step occur simultaneously.

23. The method of claim 21 further comprising the step of incorporating the catalyst control membrane having an electrode bonded thereto within an electrochemical fuel cell.

24. A system for coating an ion-exchange membrane with a catalyst layer, the system comprising:
a heater oriented to heat a surface of the ion-exchange membrane;
a fluidized bed reactor adjacent to the heater; and
compaction rolls adjacent to the fluidized bed reactor.

25. The system of claim 24 wherein the fluidized bed reactor comprises a catalyst composition therein.

26. The system of claim 24 wherein the heater is an infrared heater.

27. The system of claim 24 wherein the heater is a first heater and wherein the system further comprises a second heater located between the fluidized bed reactor and the compaction rolls.

28. The system of claim 24 further comprising an aerosol coater between the fluidized bed reactor and the compaction rolls.

29. The system of claim 28 wherein the aerosol coater comprises an ionomer solution.
